(19) Europäisches Patentamt

European Patent Office

Office européen des brevets

(11) Veröffentlichungsnummer: **0 240 085 B1**

# EUROPÄISCHE PATENTSCHRIFT

(45) Veröffentlichungstag der Patentschrift: **24.07.91**

(21) Anmeldenummer: **87200588.9**

(22) Anmeldetag: **30.03.87**

(51) Int. Cl.5: **H02K 7/116**, H02K 7/10, A23G 9/12

(54) **Haushaltsgerät mit einem Arbeitswerkzeug.**

(30) Priorität: **04.04.86 DE 3611252**

(43) Veröffentlichungstag der Anmeldung:
**07.10.87 Patentblatt 87/41**

(45) Bekanntmachung des Hinweises auf die Patenterteilung:
**24.07.91 Patentblatt 91/30**

(84) Benannte Vertragsstaaten:
**AT DE ES FR GB IT**

(56) Entgegenhaltungen:
**EP-A- 0 103 930      EP-A- 0 105 544
EP-A- 0 162 023      FR-A- 2 213 471
FR-A- 2 259 332      GB-A- 1 596 778**

(73) Patentinhaber: **Philips Patentverwaltung GmbH
Wendenstrasse 35 Postfach 10 51 49
W-2000 Hamburg 1(DE)DE**

Patentinhaber: **N.V. Philips' Gloeilampenfabrieken
Groenewoudseweg 1
NL-5621 BA Eindhoven(NL)ES FR GB IT AT**

(72) Erfinder: **Bertram, Leo
Am Sender 10
W-5190 Stolberg(DE)**
Erfinder: **Schemmann, Hugo, Dr.
Zwartebergweg 6
NL-6371 Schaesberg(DE)**
Erfinder: **Bukoschek, Romuald Leander
Dr.Pallagasse 28
A-9020 Klagenfurt(DE)**

(74) Vertreter: **Kupfermann, Fritz-Joachim,
Dipl.-Ing. et al
Philips Patentverwaltung GmbH Wendenstrasse 35 Postfach 10 51 49
W-2000 Hamburg 1(DE)**

**Beschreibung**

Die Erfindung bezieht sich auf ein Haushaltsgerät mit einem Arbeitswerkzeug, das über ein Untersetzungsgetriebe von einem Einphasensynchronmotor angetrieben wird, insbesondere Speiseeisbereiter.

Bei elektrischen Haushaltsgeräten, bei denen ein Elektromotor mit umlaufendem Rotor ein Arbeitswerkzeug antreibt, kann der Fall eintreten, daß das Arbeitswerkzeug beim Arbeitsvorgang blockiert wird. Dieses Blockieren würde nach kurzer Zeit zu einem Durchbrennen der Motorwicklungen führen, wenn nicht Maßnahmen gegen die Überhitzung der Wicklungen getroffen werden. Um das Verbrennen der Motorwicklungen und infolge dieses Verbrennens auch ein evtl. Abbrennen des Gerätes zu vermeiden, gibt es Vorschriften hinsichtlich der zulässigen Wicklungstemperaturen bei unterschiedlichen Betriebsbedingungen. Es ist gebräuchlich, in den Stromkreis des Motors einen Thermo-Schutzschalter zu legen. Dieser Schutzschalter unterbricht den Motorstrom, wenn die Wicklungen eine gewisse Erwärmung erfahren. Ein solcher Schutzschalter ist aber ein zusätzliches und zusätzlich zu montierendes Teil, welches die Herstellungskosten des Haushaltsgerätes erhöht.

Es ist bekannt, elektrische Haushaltsgeräte mit Hilfe von Einphasensynchronmotoren anzutreiben. Diese Einphasensynchronmotoren haben die Eigenschaft, bei einem Überlasten der Antriebswellen in der einen Drehrichtung ihre Drehrichtung zu ändern und in der umgekehrten Richtung anzulaufen, wenn dort die Belastung kleiner ist. Kann das Arbeitswerkzeug beispielsweise in zwei Richtungen arbeiten, dann läßt sich mit der Drehrichtungsumkehr die Arbeitsrichtung ändern und damit das Blockieren in einer Richtung beseitigen.

Aus der EP-Patentanmeldung 0 105 544 ist es bekannt, die Drehrichtungsumkehr eines Einphasensynchronmotors auszunutzen, um den Preßkegel reversierend zu drehen. Zwischen der Motorwelle und dem Preßkegel wird dabei künstlich ein Verdrehspiel eingesetzt.

Es ist Aufgabe der Erfindung, ein Haushaltsgerät der eingangs erwähnten Art zu schaffen, bei dem bei Überschreiten des maximal möglichen Motordrehmoments und des damit verbundenen Anhaltens des Werkzeuges dafür gesorgt ist, daß der Motor thermisch nicht zerstört wird ohne Zuhilfenahme von herkömmlichen elektrischen Schutzmaßnahmen.

Die gestellte Aufgabe ist erfindungsgemäß dadurch gelöst, daß als Überlastungsschutz für den Motor im Übertragungsweg zwischen dem Einphasensynchronmotor und dem Arbeitswerkzeug ein in beiden Drehrichtungen derartig wirkendes Verdrehspiel vorgesehen ist, daß der Rotor des Motors bei blockiertem Werkzeug in einen reversierenden Betriebszustand übergeht, indem er das Verdrehspiel in wechselnder Richtung durchläuft, ohne die zulässige Betriebstemperatur zu überschreiten.

Kippt der Einphasensynchronmotor bei einem Blockieren oder Schwergängigwerden des Werkzeuges ab, so läuft er aufgrund des vorgegebenen Verdrehspiel in der Gegenrichtung wieder an und weiter, bis er wieder aufgrund der Schwergängigkeit oder des Blockierens zur Umkehr gezwungen wird. Ist das Verdrehspiel groß genug, dann wird die zulässige Betriebstemperatur nicht überschritten.

Nach einer weiteren Ausgestaltung der Erfindung ist vorgesehen, daß das Verdrehspiel auf dem Abtriebszahnrad der ersten oder einer folgenden Stufe des Untersetzungsgetriebes vorgesehen ist, und zwar derart, daß der Motor in jeder der Drehrichtungen mehr als eine Umdrehung durchläuft. Vorzugsweise wird das Verdrehspiel größer gewählt werden, indem der Rotor des Motors in jeder Drehrichtung beispielsweise mindestens 10 Umdrehungen machen kann, bevor er wieder umkehrt. Zwischen den Umkehrpunkten ist der Betriebsstrom des Motors derart klein, daß keine Überhitzung auftritt, obwohl der Motor nicht abgeschaltet wird.

Nach einer weiteren Ausgestaltung der Erfindung ist bei einem Haushaltsgerät zur Zubereitung von Speiseeis mit einem die Eismasse aufnehmenden, gekühlten topfförmigen Behälter, in dem ein Rührwerkzeug umläuft, vorgesehen, daß bei einer Rührwerkzeugdrehzahl von 18 bis 30 U/min und einem Untersetzungsverhältnis von ca. 1:100 bis 170 zwischen Motorwelle und dem Getriebezahnrad, auf welchen das Verdrehspiel implementiert ist, die freie Rotorverdrehung in jeder Drehrichtung 25 bis 50 Umdrehungen beträgt. Bei einem Speiseeisbereiter liegt die Gefahr einer Blockierung des Rührwerkzeuges relativ nahe, weil nämlich ein Speiseeisbereiter gerade in dem Bereich arbeiten soll, in dem die Eismasse an der kalten Fläche friert, aber nicht anfriert. Das eingebaute Verdrehspiel sorgt also, ganz gleich, ob das Rührwerkzeug umlaufen kann oder festfriert, stets für eine ausreichende Drehbewegung des Motors gesorgt, so daß dieser immer unterhalb der zulässigen Betriebstempratur arbeitet und ein Thermoschutz mit Hilfe eines besonderen Schalters überflüssig ist.

Das Abkippen des Einphasensynchronmotors an den beiden Enden des Verdrehspiels ist an sich bereits akustisch hörbar und gibt dem Benutzer ein Signal, daß das Rührwerkzeug stillsteht.

Bei einem Einphasensynchronmotor steigt im Augenblick der Richtungsumkehr der Strom in den Motorspulen an. Nach einer weiteren Ausgestaltung der Erfindung ist vorgesehen, daß dieser Stromanstieg in den Motorspulen bei der Drehrichtungsumkehr ausgenutzt wird zur Erzeugung von Warnsignalen. Diese Warnsignale können optischer, akustischer oder auch elektronischer Art sein.

Nach einer weiteren Ausgestaltung der Erfindung ist vorgesehen, daß die Ansprechschwelle, die durch das Abkippen des Motors eingeleitet wird, einstellbar ist, wobei es besonders vorteilhaft ist, wenn die Ansprechschwelle einstellbar ist auf die gewünschte Eiskonsistenz.

Die Erfindung wird anhand der Zeichnung näher erläutert. Es zeigen:

Fig. l schematisch eine Draufsicht auf ein Stufengetriebe eines elektrischen Haushaltsgerätes, t,ei dem zwischen der letzten Getriebestufe und dem anzutreiben Arbeitswerkzeug ein Verdrehspiel vorgesehen ist,

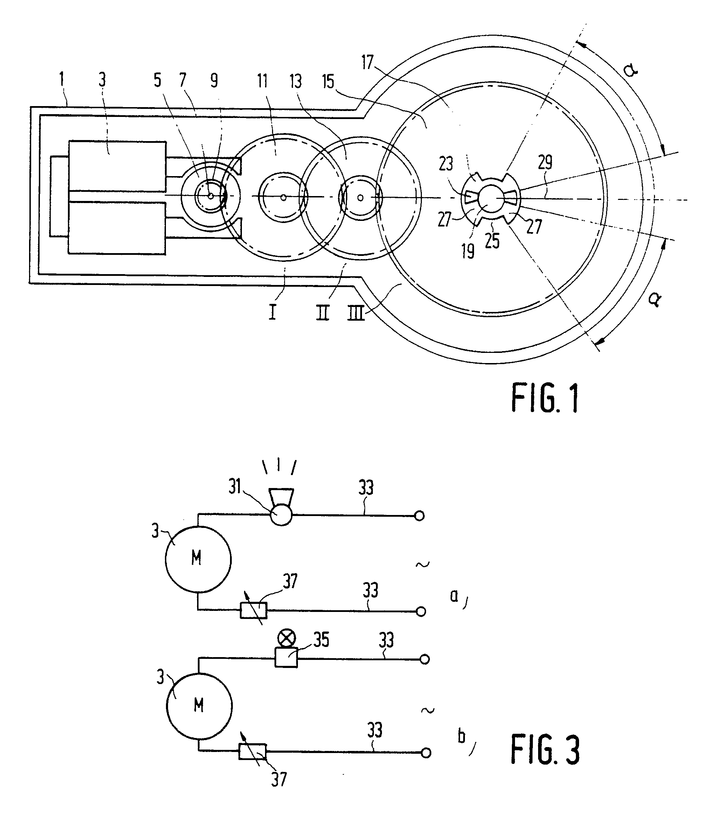

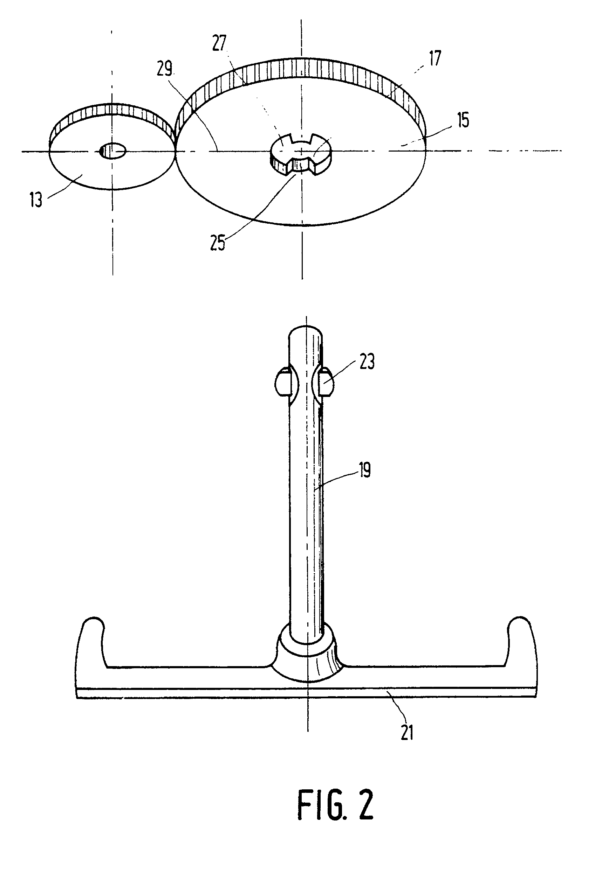

Fig. 2 die mit Verdrehspiel zusammenwirkenden Teile, wie letztes Rad der Getriebestufe und von diesem Rad angetriebenes Arbeitswerkzeug, schaubildlich in Explosionsansicht,

Fig. 3 die Darstellung einer Schaltung zur Auslösung eines beim Stromanstieg in den Umkehrpunkten abgebbaren Warntones oder eines Warnblinklichtes.

In einem Gehäuse 1 ist ein Einphasensynchronmotor 3 angeordnet, der über seinen Rotor 5 und ein auf der Rotorwelle 7 aufgeflanschtes Zahnrad 9 Getriebezahnräder 11, 13 und 15 eines Getriebes mit drei Stufen I, II und III antreibt. In dem letzten Zahnrad 15 befindet sich eine Öffnung 17, in die eine Antriebswelle 19 eines Arbeitswerkzeuges einschiebbar ist. Wenn es sich bei dem Gehäuse 1 und dem innerhalb des Gehäuses angeodneten Antrieb 3 bis 17 um den Antrieb eines Eisbereiters handelt, dann ist die Antriebswelle 19 die Welle eines Rührwerkzeuges 21, die innerhalb eines topfförmigen Behälters von einem Gefrierboden anfrierendes Eis abschaben kann.

Es kann der Fall eintreten, daß das Rührwerkzeug 21 infolge von vielleicht nicht genau eingehaltenen Temperaturbedingungen oder bei Überschreiten einer maximalen Betriebszeit im topfförmigen Behälter anfriert und damit festgesetzt wird. Wäre die Verbindung zwischen der Antriebswelle 19 und dem Zahnrad 15 starr, dann würde der Einphasensynchronmotor nur mit geringen Verdrehwinkeln, die sich aus dem Zahnradspiel der Zahnräder 9 bis 15 ergeben, zustandekommen. Der Stromanstieg in den Motorspulen im Augenblick der Drehrichtungsumkehr würde dadurch so rasch aufeinander folgen, daß sich der Motor unzulässig erhitzt. Diesem unzulässigen Erhitzen kann man elektrisch nur durch einen Thermoschalter begegnen, der bei einer unzulässigen Erwärmung den Motor abschaltet.

Erfindungsgemäß ist zwischen dem Zahnrad 15 und der Antriebswelle 19 ein Verdrehspiel von ca. 50° in jeder Richtung vorgesehen. Dieses Verdrehspiel ergibt sich daraus, daß an der Antriebswelle 19 Verquetschungen 23 vorgesehen sind, die beiderseits der Welle miteinander fluchten. Weiterhin sind in der Öffnng 17 Nocken 25 vorgesehen, die von gegenüberliegenden Seiten in die Öffnung 17 hinein greifen. In den Freiräumen 27 zwischen den Nocken 25 können sich die Verquetschungen 23 um jeweils ca. 50° aus einer durch eine Linie 29 angedeutete Mittelstellung heraus frei verdrehen, ehe sie wieder mit einem Nocken 25 zusammenstoßen.

Wenn man davon ausgeht, daß das Verdrehspiel insgesamt ca. l00° beträgt und der umlaufende Rotor mit 3.000 U/min das Zahnrad 15 ungefähr mit 21 U/min antreibt, dann kommen auf eine Umdrehung des Zahnrades 15 ca. 143 Umdrehungen des Rotors 5. Bei einem Verdrehspiel von 100 Winkelgraden ergeben sich dann beim Durchlaufen des Verdrehspiels bei blockiertem Zahnrad 15 ca. 40 Umdrehungen des Rotors 5. Diese Anzahl von Umdrehungen ist ausreichend, um den Motorstrom auch bei blockierter Antriebswelle 19 immer ausreichend niedrig zu halten. Ein Thermoschalter wird deshalb überflüssig.

In den Umkehrpunkten der Drehrichtung zieht der Einphasensynchronmotor mehr Strom. Diese impulsförmigen Stromspitzen können zur Auslösung von Warnsignalen, beispielsweise eines Pfeiftons oder dergl., ausgenutzt werden. Fig. 3a zeigt ein entsprechendes Prinzipschaltbild mit einem Signalgeber 31, der in den Zuleitungen 33 des Motors 3 angeordnet ist. Beim Auftreten von Stromspitzen in den Umkehraugenblicken wird der Signalgeber 31 erregt, und es ertönt ein Hupton, der sich bei jeder folgenden Stromspitze wiederholt.

Fig. 3b zeigt eine ähnliche Schaltung, in der eine Glühlampe 35 angeordnet ist, die in Augenblicken der Stromspitzen aufleuchtet. Die aufeinanderfolgenden Stromspitzen ergeben dabei ein wiederholtes Aufleuchten und auf einfache Weise ein markantes Warnzeichen.

Es kann wünschenswert sein, die Ansprechschwelle des Einphasensynchronmotors, bei der er abkippen soll, bewußt vorzugeben. Dies ist ohne weiteres möglich durch die Einbringung eines einstellbaren Widerstandes 37 in den jeweiligen Motorstromkreis. Bei einem Eisbereiter kann auf diese Weise beispielsweise die Eiskonsistenz, ob Softeis oder festeres Speiseeis, vorgegeben werden.

## Patentansprüche

1. Haushaltsgerät mit einem Arbeitswerkzeug (19, 21), das über ein Untersetzungsgetriebe von einem Einphasensynchronmotor (3) angetrieben wird, insbesondere Speiseeisbereiter, dadurch gekennzeichnet, daß als Überlastungsschutz für den Motor (3) im Übertragungsweg

zwischen dem Einphasensynchronmotor (3) und dem Arbeitswerkzeug (19, 21) ein in beiden Drehrichtungen derartig wirkendes Verdrehspiel vorgesehen ist, daß der Rotor (5) des Motors (3) bei blockiertem Werkzeug (19, 21) in einen reversierenden Betriebszustand übergeht, indem er das Verdrehspiel in wechselnder Richtung durchläuft, ohne die zulässige Betriebstemperatur zu überschreiten.

2. Haushaltsgerät nach Anspruch 1, dadurch gekennzeichnet, daß das Verdrehspiel auf dem Abtriebszahnrad bei der ersten oder einer folgenden Stufe des Untersetzungsgetriebes vorgesehen ist, und zwar derart, daß der Motor (3) in jeder der Drehrichtungen mehr als eine Umdrehung durchläuft.

3. Haushaltsgerät nach Anspruch 2, dadurch gekennzeichnet, daß das Verdrehspiel in jeder der Drehrichtungen mindestens 10 Motorumdrehungen zuläßt.

4. Haushaltsgerät nach den Ansprüchen 1 bis 3 zur Zubereitung von Speiseeis mit einem die Eismasse aufnehmenden, gekühlten topfförmigen Behälter, in dem ein Rührwerkzeug umläuft, dadurch gekennzeichnet, daß bei einer Rührwerkzeugdrehzahl von 18 bis 30 U/min und einem Untersetzungsverhältnis von ca. 1:100 bis 170 zwischen Motorwelle (7) und dem Getriebezahnrad (15), auf welchen das Verdrehspiel implementiert ist, die freie Rotorverdrehung in jeder Drehrichtung 25 bis 50 Umdrehungen beträgt.

5. Haushaltsgerät nach einem oder mehreren der Ansprüche 1 bis 4, dadurch gekennzeichnet, daß der Stromanstieg in den Motorspulen bei der Drehrichtungsumkehr ausgenutzt wird zur Erzeugung von Warnsignalen.

6. Haushaltsgerät nach Anspruch 5, dadurch gekennzeichnet, daß die Warnsignale optischer (35), akustischer (31) und elektronischer (31) Art sind.

7. Haushaltsgerät nach einem oder mehreren der Ansprüche 1 bis 6, dadurch gekennzeichnet, daß die Ansprechschwelle, die durch das Abkippen des Motors (3) eingeleitet wird, einstellbar ist.

8. Haushaltsgerät nach Anspruch 7, dadurch geknnzeichnet, daß die Ansprechschwelle einstellbar ist auf die gewünschte Eiskonsistenz.

9. Haushaltsgerät nach Anspruch 8, dadurch gekennzeichnet, daß zur Einstellung der Ansprechschwelle in dem Motorstromkreis ein regelbarer Widerstand (37) vorgesehen ist.

## Claims

1. A domestic appliance, in particular an ice-cream maker, comprising a tool (19, 21) which is driven by a single-phase synchronous motor (3) *via* a reduction mechanism, characterized in that as overload protection for the motor (3) backlash is provided in the transmission path between the single-phase synchronous motor (3) and the tool (19, 21), which backlash acts in both directions of rotation in such a way that when the tool (19, 21) is blocked the rotor (5) of the motor (3) changes to a reversing mode of operation in which it passes through the backlash range in alternate directions without the permissible operating temperature being exceeded.

2. A domestic appliance as claimed in Claim 1, characterized in that the backlash is provided at the driven gear wheel of the first or a subsequent stage of the reduction mechanism, in such a way the motor (3) performs more than one revolution in each of the directions of rotation.

3. A domestic appliance as claimed in Claim 2, characterized in that the backlash in each of the directions of rotation corresponds to at least 10 revolutions of the motor.

4. A domestic appliance as claimed in Claims 1 to 3, for making ice-cream, the appliance comprising a cooled bowl-shaped container for the ice-cream mass, in which container a stirring tool rotates, characterized in that the free rotation of the rotor in each direction of rotation is 25 to 50 revolutions when the stirring tool rotates with 18 to 30 revolutions per minute and the reduction ratio between the motor shaft (7) and the gear wheel (15) where the backlash is introduced is approximately 1:100 to 170.

5. A domestic appliance as claimed in any one or several of the Claims 1 to 4, characterized in that the increase in current through the motor coils when the direction of rotation is reversed is utilized for generating warning signals.

6. A domestic appliance as claimed in Claim 5, characterized in that the warning signals are of an optical (35), acoustic (31) and electronic (31) nature.

7. A domestic appliance as claimed in any one or several of the Claims 1 to 6, characterized in that the actuating threshold which is initiated by stalling of the motor (3) is adjustable.

8. A domestic appliance as claimed in Claim 7, characterized in that the actuating threshold can be adjusted to the desired solidity of the ice-cream.

9. A domestic appliance as claimed in Claim 8, characterized in that for adjusting the actuating threshold a variable resistor (37) is arranged in the motor circuit.

**Revendications**

1. Appareil électroménager, notamment une sorbetière, muni d'un outil de mélange (19, 21) entraîné par un moteur synchrone monophasé (3) par l'intermédiaire d'un mécanisme démultiplicateur, caractérisé en ce que, comme protection contre la surcharge du moteur (3), dans la voie de transmission entre le moteur synchrone monophasé (3) et l'outil de mélange (19, 21), est établi dans les deux sens de rotation un jeu à roue libre fonctionnant de façon que, lors du blocage de l'outil (19, 21), le rotor (5) du moteur (3) entre dans un mode de fonctionnement réversible dans lequel il parcourt le jeu à roue libre dans des sens alternés sans dépasser la température de fonctionnement admissible.

2. Appareil électroménager selon la revendication 1, caractérisé en ce que le jeu à roue libre est établi sur la roue dentée motrice du premier engrenage démultiplicateur du mécanisme démultiplicateur ou d'un engrenage suivant de celui-ci, et cela de façon que, dans chacun des sens de rotation, le moteur (3) parcoure plus d'un tour.

3. Appareil électroménager selon la revendication 2, caractérisé en ce que le jeu à roue libre permet au moins 10 tours du moteur dans chacun des sens de rotation.

4. Appareil électroménager selon les revendications 1 à 3, réalisé sous la forme d'une sorbetière munie d'un récipient réfrigéré en forme de cuvette servant à recevoir la masse de crème glacée et dans lequel tourne un outil de mélange, il est prévu que, à une vitesse de rotation de l'outil de mélange comprise entre 18 et 30 tours/mn et à un taux de démultiplication d'environ 1 : 100 à 170 entre l'arbre (7) du moteur et la roue dentée (5) sur laquelle est établi le jeu à roue libre, la rotation libre du rotor dans chaque sens de rotation est de 25 à 50 tours.

5. Appareil électroménager selon une ou plusieurs des revendications 1 à 4, caractérisé en ce que l'augmentation du courant se produisant dans les bobines du moteur lors du renversement du sens de rotation est mise à profit pour engendrer des signaux avertisseurs.

6. Appareil électroménager selon la revendication 5, caractérisé en ce que les signaux avertisseurs sont de type optique (35), acoustique (31) et électronique (31).

7. Appareil électroménager selon une ou plusieurs des revendications 1 à 6, caractérisé en ce que le seuil de réponse introduit par le calage du moteur (3) est réglable.

8. Appareil électroménager selon la revendication 7, caractérisé en ce que le seuil de réponse peut être réglé à la consistance voulue de la crème glacée.

9. Appareil électroménager selon la revendication 8, caractérisé en ce que, pour le réglage du seuil de réponse, une résistance variable (37) est insérée dans le circuit du courant du moteur.

FIG. 1

FIG. 3

FIG. 2